# EUROPÄISCHE PATENTSCHRIFT

(11) **EP 2 632 853 B1**
(45) Veröffentlichungstag und Bekanntmachung des Hinweises auf die Patenterteilung: **15.02.2017**
(21) Anmeldenummer: 11772964.0
(22) Anmeldetag: 19.10.2011
(51) Int. Cl.: C01B 32/00, B01J 20/20, C04B 35/52, H01M 4/04, H01M 4/587, C04B 38/06, B01J 20/28, B01J 20/30, C01B 32/20, C01B 32/30, H01M 4/133, H01M 4/1393, H01M 10/052, H01M 4/96, H01M 4/583

(54) **VERFAHREN FÜR HERSTELLUNG EINES PORÖSEN KOHLENSTOFFERZEUGNISES**
METHOD FOR THE PRODUCTION OF A POROUS CARBON PRODUCT
PROCÉDÉ DE FABRICATION D'UN PRODUIT À BASE DE CARBONE POREUX

(30) Priorität: 25.10.2010 DE 102010049249
(43) Veröffentlichungstag der Anmeldung: 04.09.2013
(73) Patentinhaber: Heraeus Quarzglas GmbH & Co. KG, 63450 Hanau (DE)
(72) Erfinder: NEUMANN, Christian, 35410 Hungen (DE); BECKER, Jörg, 61194Niddatal (DE)
(74) Vertreter: Staudt, Armin Walter
(86) Internationale Anmeldenummer: PCT/EP2011/068243
(87) Internationale Veröffentlichungsnummer: WO 2012/055731

(56) Entgegenhaltungen:
- EP-A1- 2 037 515
- WO-A1-2009/051925
- RYOO R ET AL: "Synthesis of highly ordered carbon molecular sieves via template-mediated structural transformation", JOURNAL OF PHYSICAL CHEMISTRY. B, MATERIALS, SURFACES, INTERFACES AND BIOPHYSICAL, WASHINGTON, DC, US, Bd. 103, Nr. 37, 16. September 1999 (1999-09-16), Seiten 7743-7746, XP002988342, ISSN: 1089-5647, DOI: 10.1021/JP991673A

## Beschreibung

Die vorliegende Erfindung betrifft ein Verfahren zur Herstellung eines porösen Kohlenstofferzeugnisses.

Monolithische Formkörper aus Kohlenstoff werden beispielsweise in Elektroden für Brennstoffzellen, Superkondensatoren und elektrischen Akkumulatoren (Sekundärbatterien) verwendet und als Adsorptionsmittel für Flüssigkeiten und Gase, als Speichermedium für Gase, als Trägermaterial in chromatographischen Anwendungen oder katalytischen Prozessen und als Werkstoff im Maschinenbau oder in der Medizintechnik eingesetzt.

### Stand der Technik

Beim Einsatz für Elektroden wiederaufladbarer Lithium-Batterien wird ein Elektrodenmaterial gefordert, das in der Lage ist, Lithium bei geringem Ladungsverlust reversibel ein- und auszulagern (zu interkalieren). Gleichzeitig werden möglichst kurze Aufladezeiten und hohe Ladekapazitäten der Batterie angestrebt. Hierfür ist eine möglichst hohe Porosität (Durchlässigkeit) bei gleichzeitig möglichst geringer Oberfläche erwünscht. Elektrodenmaterialien mit großer Oberfläche zeigen einen relativ hohen Ladungsverlust, der sich im Wesentlichen als irreversibler Verlust bei der ersten Interkalation von Lithium äußert.

Aus der DE 29 46 688 A1 sind Verfahren zur Herstellung von porösem Kohlenstoff unter Einsatz einer temporären Vorform aus porösem Material (eines so genannten "Templats") bekannt. Dabei wird eine Vorläufersubstanz für Kohlenstoff in den Poren des "Templats" aus anorganischem Matrixmaterial abgelagert, das eine Oberfläche von mindestens 1 m²/g aufweist. Als geeignete Matrixmaterialien für das Templat werden SiO₂-Gel, poröses Glas, Aluminiumoxid oder andere poröse hitzebeständige Oxide genannt. Das Matrixmaterial hat eine Porosität von mindestens 40 % und eine mittlere Porengröße im Bereich von 3 nm bis 2 µm.

Als Vorläufersubstanz für Kohlenstoff werden polymerisierbare organische Materialien empfohlen, wie etwa einer Mischung aus Phenol und Hexamin oder einem Phenol-Formaldehyd-Resol. Diese wird als Flüssigkeit oder als Gas in die Poren des Templats eingeführt und polymerisiert. Nach der Polymerisierung und anschließender Karbonisierung wird das anorganische Matrixmaterial des Templats entfernt, beispielsweise durch Lösen in NaOH oder in Flusssäure.

Auf diese Weise wird ein partikel- oder flockenförmiges Kohlenstofferzeugnis erhalten, das eine Porenstruktur aufweist, die etwa der Materialverteilung des Templats entspricht, und das grundsätzlich als Ausgangsmaterial für die Herstellung von Elektroden für Li-Batterien geeignet ist.

Für eine gute Schnellladefähigkeit ist eine leichte Zugänglichkeit der inneren Oberflächen entscheidend. In dem Zusammenhang erweist sich eine so genannte "hierarchische Porosität" als vorteilhaft. Große Oberflächen können durch Poren im Nanometerbereich bereitgestellt werden. Um die Zugänglichkeit zu diesen Poren zu steigern, sind diese idealerweise über ein durchgängiges makroporöses Transportsystem verbunden.

Ein monolithisches Kohlenstofferzeugnis mit einer derartigen hierarchischen Porenstruktur aus Makroporen und Mesoporen ist in der US 2005/0169829 A1 beschrieben. Zur Herstellung der hierarchischen Porenstruktur wird ein SiO₂-Templat erzeugt, indem eine Dispersion aus Siliziumdioxidkügelchen mit Durchmessern von 800 nm bis 10 µm und einer polymerisierbaren Substanz in einer Form erhitzt wird, so dass durch Polymerisation ein poröses Silica-Gel erhalten wird, das nach dem Entfernen der überschüssigen Flüssigkeit getrocknet und vollständig auspolymerisiert wird.

Die Poren des so erhaltenen SiO₂-Templats werden anschließend mit einer Vorläufersubstanz für Kohlenstoff imprägniert, die Kohlenstoffvorläufersubstanz zu Kohlenstoff karbonisiert und das SiO₂-Templat anschließend durch Lösen in HF oder NaOH entfernt. Auch das so erhaltene Kohlenstofferzeugnis weist eine etwa der Materialverteilung des Templats entsprechende Porenstruktur auf.

In der Regel sind Oberflächenmorphologie und Porenstruktur der so erzeugten Kohlenstofferzeugnisse nicht optimal und bedürfen der Nachbehandlung. So haben sich beispielsweise zur Verringerung einer zu hohen Mikroporosität Beschichtungsprozesse bewährt, bei denen die inneren Oberflächen des Kohlenstofferzeugnisses durch Infiltration mit einer weiteren Schicht aus graphitischem Kohlenstoff versehen werden.

Auf diese Weise wird ein kohlenstoffbasierter Verbundkörper erhalten, bei dem zwei oder mehr Kohlenstoffvarietäten in Kern-Schale-Struktur zueinander angeordnet sind.

So wird beispielsweise in der US 6,596,437 B2 ein kohlenstoffbasierter Werkstoff für die Elektrode einer Lithiumionen-Batterie beschrieben, der aus einem Kern aus kristallinem Graphit besteht, der von einer Hülle einer Dicke zwischen 1 nm und 200 nm aus amorphem oder turbostratischem Graphit umhüllt ist. Zur Herstellung werden natürliche oder synthetische Graphitpartikel mit einer amorphen Vorläufersubstanz für graphitischen Kohlenstoff beschichtet und anschließend carbonisiert. Als Vorläufersubstanz wird in Tetrahydrofuran (THF) gelöstes Phenolkunstharz Pech eingesetzt.

Ein weiteres Verfahren zur Herstellung einer zweilagigen porösen Kohlenstoffstruktur mit Kern und Hülle ist aus der WO 2009/051925 A1 bekannt. Dabei wird ein textiles Erzeugnis, wie etwa Zellulosefasern, Baumwolle und dergleichen. Carbonisiert, so dass ein Grundgerüst aus turbostratischem Kohlenstoff erhalten wird. In das Grundgerüst wird nachfolgend graphitisierbarer Kohlenstoff infiltriert. Das Endprodukt dient als Templatmaterial für die Herstellung Batterie-Elektroden.

### Technische Aufgabenstellung

Gängige graphitisierbare Kohlenstoff-Vormaterialien für die Infiltration, insbesondere mesophasiges Pech, sind nicht in hoher Konzentration löslich und haben einen Anteil unlöslicher Bestandteile. Durch Infiltration mit anschließender Carbonisierung ergibt sich daher nur eine geringe Dicke der abgelagerten, graphitähnlichen Schicht, so dass in der Regel mehrere derartige Infiltrations- und Carbonisierungsprozesse nacheinander auszuführen sind. Derartige Mehrfachprozesse erhöhen jedoch die Fertigungskosten und können Inhomogenitäten hervorrufen, etwa infolge der allmählichen Verstopfung von Infiltrationskanälen. Zudem ist mesophasiges Pech teuer.

Der Erfindung liegt die Aufgabe zugrunde, ein Verfahren anzugeben, , das eine kostengünstige Herstellung eines Erzeugnisses aus Kohlenstoff mit hoher Porosität und niedriger Oberfläche gestattet, und das insbesondere auch bei einer geringen Anzahl von Infiltrationsprozessen zu einem porösen Kohlenstofferzeugnis führt, das eine innere Oberfläche und eine Morphologie aufweist, die für einen Einsatz als Elektrodenmaterial für eine Lithium-Batterie besonders geeignet sind.

### Allgemeine Beschreibung der Erfindung

Diese Aufgabe wird erfindungsgemäß durch ein Verfahren gelöst, das folgende Verfahrensschritte umfasst:
(a) Bereitstellen einer porösen Kohlenstoffstruktur mit einer ersten spezifischen Oberfläche,
(b) Infiltrieren der Kohlenstoffstruktur mit einer Vorläufersubstanz für graphitisierbaren Kohlenstoff,
(c) Carbonisieren der Vorläufersubstanz unter Bildung des Kohlenstofferzeugnisses mit einer zweiten spezifischen Oberfläche, die geringer ist als die erste spezifische Oberfläche,
wobei dass das Bereitstellen der Kohlenstoffstruktur gemäß Verfahrensschritt (a) umfasst:
(I) Bereitstellen eines Poren aufweisenden Templats,
(II) Infiltrieren der Poren des Templats mit einer Lösung, die eine Vorstufe für nicht graphitisierbaren Kohlenstoff enthält,
(III) Carbonisieren der Vorstufe unter Bildung der Kohlenstoffstruktur mit der ersten spezifischen Oberfläche, und
(IV) Entfernen des Templats.

Das erfindungsgemäße Verfahren umfasst mindestens zwei Infiltrationsprozesse unter Einsatz kohlenstoffhaltiger Komponenten mit jeweils anschließender Carbonisierung. Ergebnis des ersten dieser Prozesse ist eine poröse Kohlenstoffstruktur aus so genanntem "turbostratischem", nicht graphitisierbarem Kohlenstoff. Um diese zu erzeugen, werden die Poren eines porösen Templats mit einer Lösung infiltriert, die mindestens eine nicht graphitisierbare, kohlenstoffhaltige Komponente enthält, die nach dem Carbonisieren nicht graphitischen und auch nicht graphitisierbaren Kohlenstoff ergibt, der in der Literatur auch als "turbostratischer" Kohlenstoff" oder "hard carbon" bezeichnet wird.

Turbostratischer Kohlenstoff weist ein Schichtgefüge aus Graphenschichten auf. Im Gegensatz zu Graphit mit kristallographischer Fernordnung der Graphenschichten ist das Schichtgefüge in turbostratischem Kohlenstoff infolge von Translation oder Rotation einzelner Schichtstapel jedoch mehr oder weniger fehlgeordnet. Fast alle synthetisch hergestellten Kohlenstofferzeugnisse und so genannter amorpher Kohlenstoff (Glaskohlenstoff) fallen mit turbostratischem Schichtgefüge an. Kohlenstoff mit turbostratischem Schichtgefüge ist durch Erhitzen nicht graphitisierbar und wird hier auch als "nicht graphitisierbarer Kohlenstoff" bezeichnet. Für die vorliegende Erfindung relevant ist der Umstand, dass als Vorstufe für nicht graphitisierbaren Kohlenstoff eine große Zahl handelsüblicher kohlenstoffhaltiger Massenchemikalien einsetzbar ist, die zudem in hoher Konzentration löslich sind. Dadurch ergibt sich die Möglichkeit einer relativ einfachen und kostengünstigen Herstellung von nicht graphitisierbarem, turbostratischem Kohlenstoff.

Beispielsweise sind als Vorstufe für nicht graphitisierbaren Kohlenstoff wasserlösliche organische Kohlenstoffverbindungen wie Saccharose, Fructose oder Glucose zu nennen. Diese können in Lösungen mit geringer Viskosität in die Poren des Templats sehr einfach und gleichmäßig infiltriert werden. Die Infiltration der Vorstufe in die Poren des Templats erfolgt dabei anhand bekannter Techniken, wobei insbesondere Tauchen, Pumpen und Schwenken zu nennen sind.

Das Infiltrieren mit der nicht graphitisierbaren Vorstufe für turbostratischen Kohlenstoff erfolgt als Einfach-Infiltration oder Mehrfach-Infiltration des Templats. Nach jeder Infiltration, von Zeit zu Zeit oder einmalig abschließend ist ein Carbonisierungsprozess vorgesehen, der zu einer Schicht aus turbostratischem Kohlenstoff in den Poren des Templats führt. Wegen der geringen Viskosität der Vorstufen-Lösung ist eine Sättigung der Templat-Poren nach einer oder relativ wenigen Infiltrationen erreicht, und auch Mehrfach-Infiltrationen sind mit einem relativ geringen Kostenaufwand verbunden.

Trotz Vorhandensein von Kohlenstoff-Schichtstapeln, aus denen das Elektrodenmaterial wiederaufladbarer Lithium-Batterien bevorzugt besteht, ist turbostratischer (nicht graphitisierbarer) Kohlenstoff für diese Anwendung in der Regel nicht geeignet. Denn er zeigt häufig eine hohe Mikroporosität und damit einhergehend eine hohe spezifische Oberfläche, die zu irreversiblen Kapazitätsverlusten beim ersten Aufladen der Batterie führt.

Daher wird erfindungsgemäß der infolge des ersten Infiltrationsprozesses erzeugte turbostratische Kohlenstoff in einem zweiten Infiltrationsprozess mit einem anderen, nämlich einem graphitisierbaren Kohlenstoffmaterial beschichtet. Dieses bildet durch Carbonisieren Graphit oder graphitähnliches Schichtgefüge, das zwar auch turbostratische Anteile enthalten kann, das jedoch geordneter und graphitähnlicher ist als der aus der nicht graphitisierbaren Vorstufe erhaltene turbostratische Kohlenstoff, und das insbesondere eine geringe Mikroporosität und damit auch eine geringere spezifische Oberfläche aufweist. Die graphitisierbare Vorläufersubstanz erfährt beim Carbonisieren eine merkliche Umlagerung von Graphenschichten in Richtung auf eine Graphitstruktur und wird in der Literatur auch als "soft carbon" bezeichnet.

Die als Ergebnis des Carbonisierens der graphitisierbaren Vorläufersubstanz erhaltene Kohlenstoffvarietät wird im Folgenden auch als "graphitähnlicher Kohlenstoff" bezeichnet. Der graphitähnliche Kohlenstoff vermindert die Mikroporosität und die spezifische Oberfläche des Verbundmaterials, ohne die Zugänglichkeit zu den Kohlenstoff-Schichtstapeln des turbostratischen Kohlenstoffs nennenswert zu beeinträchtigen.

Mikroporen im Sinne dieser Erfindung haben eine Porengröße im Bereich von weniger als 2 nm. Mesoporen haben eine Porengröße im Bereich von 2 bis 50 nm.

Auf diese Weise wird eine Kern-Hülle-Struktur (core-shell structure) erzeugt, in welcher der turbostratische, nicht graphitisierbare Kohlenstoff den Kern bildet, und der im zweiten Infiltrations- und Carbonisierungsprozess erzeugte graphitische Kohlenstoff die Hülle.

Der turbostratische Kohlenstoff fällt als Schicht an den Oberflächen des Templats an. Damit der im zweiten Infiltrations- und Carbonisierungsprozess erzeugte Kohlenstoff allseitig an den turbostratischen Kohlenstoff angrenzt (und nicht nur an die der Vorform abgewandte Oberfläche), wird das Material des Templats vor dem zweiten Infiltrationsprozess entfernt.

Die mikroporöse Oberfläche des turbostratischen Kohlenstoffs wird durch die größeren Moleküle einer vorzugsweise aromatischen Vorläufersubstanz für graphitisierbaren Kohlenstoff drastisch reduziert, so dass ein Kohlenstofferzeugnis erhalten wird, dessen Eigenschaften in Bezug auf Morphologie und Oberfläche denjenigen eines Kohlenstofferzeugnisses aus rein graphitischem und teuerem Ausgangsmaterial entsprechen.

Somit wird mit dem erfindungsgemäß Verfahren ein kostengünstiges Erzeugnis aus porösem Kohlenstoff mit hoher Porosität und niedriger Oberfläche erhalten, das insbesondere für einen Einsatz als Elektrodenmaterial für eine Lithium-Batterie geeignet ist.

Vorzugsweise wird als Vorstufe für den turbostratischen Kohlenstoff gemäß Verfahrensschritt (a) (II) wasserlösliches Kohlenhydrat, vorzugsweise Saccharose, eingesetzt.

Wasserlösliche Kohlenhydrate sind als preiswerte Massenchemikalien erhältlich. Die Lösungen der Kohlenhydrate - wobei auch alkoholische oder andere organische Lösungen in Betracht kommen - zeichnen sich durch eine geringe Viskosität aus, so dass sich auch enge Porenkanäle leicht vollständig und gleichmäßig infiltrieren lassen. Nach dem Infiltrieren und dem Entfernen des Lösungsmittels wird daraus nach dem Carbonisieren eine Schicht aus turbostratischem, nicht graphitisierbarem Kohlenstoff auf den Oberflächen des Templats erhalten.

Es hat sich bewährt, wenn beim Carbonisieren der Vorstufe gemäß Verfahrensschritt (a) (III) eine Kohlenstoffstruktur mit einer spezifischen Oberfläche (nach BET) im Bereich von 400 bis 600 m²/g erzeugt wird.

Die spezifische Oberfläche wird nach der DIN ISO 9277- Mai 2003 (Bestimmung der spezifischen Oberfläche von Feststoffen durch Gasadsorption nach dem BET-Verfahren") ermittelt.

Weiterhin hat es sich als günstig erwiesen, wenn das Carbonisieren gemäß Verfahrensschritt (c) unter einer Inertgas-Atmosphäre oder unter Vakuum bei einer Temperatur von mindestens 500 C erfolgt.

Das Carbonisieren der Kohlenstoff-Vorläufersubstanz gemäß Verfahrensschritt (c) erfolgt bei hoher Temperatur bis zu 3000 °C - vorzugsweise aber bei einer deutlich geringeren Temperatur unter 1000 °C - unter einem möglichst sauerstofffreien Gas oder unter Vakuum. Die Mindesttemperatur von 500 °C für das Carbonisieren bestimmt sich aufgrund der Zersetzungstemperatur der graphitisierbaren Vorläufersubstanz.

Es hat sich bewährt, wenn sich dem Carbonisieren eine Aktivierungsbehandlung unter oxidierender Atmosphäre bei einer Temperatur im Bereich von 200 °C bis 450 °C, vorzugsweise bei einer Temperatur im Bereich von 350 °C bis 425 °C, anschließt.

Die Aktivierungsbehandlung unter oxidierender Atmosphäre dient zur selektiven Oxidation und Absättigung aktiver Kohlenstoff-Zentren innerhalb des Kohlenstofferzeugnisses, ohne dass die Gesamtstruktur "verbrennt.

Beim Carbonisieren der Kohlenstoff-Vorläufersubstanz gemäß Verfahrensschritt (c) wird vorzugsweise ein Kohlenstofferzeugnis mit einer spezifischen Oberfläche (nach BET) im Bereich von weniger als 50 m²/g erzeugt.

Je geringer die spezifische Oberfläche nach dem Carbonisieren ist umso geringer sind die irreversiblen Kapazitätsverluste beim Aufladen einer aus dem Kohlenstofferzeugnis erzeugten Batterie.

Das Templat besteht beispielsweise aus einem porösen glasigen oder keramischen Werkstoff. Bei einer besonders bevorzugten Verfahrensvariante ist vorgesehen, dass das Bereitstellen des Templats gemäß Verfahrensschritt (a) (I) das Herstellen von synthetischem Kieselsäuresoot mit hierarchischer Porenstruktur umfasst.

Das Templat aus porösem Kieselsäuresoot (im Folgenden auch als "SiO₂-Sootvorform" oder kurz als "Sootvorform" bezeichnet) ist lediglich temporär vorhanden. Die "hierarchische Porosität" der Sootvorform bildet sich auf das endgültige Kohlenstofferzeugnis ab und ermöglicht eine leichte Zugänglichkeit der inneren Oberflächen und ist für eine gute Schnellladefähigkeit entscheidend. Große Oberflächen können durch Poren im Nanometerbereich bereitgestellt werden. Um die Zugänglichkeit zu diesen Poren zu verbessern, sind diese idealerweise über ein durchgängiges, makroporöses Transportsystem verbunden.

Das Herstellen der SiO₂-Sootvorform erfolgt beispielsweise in einem Sootabscheideverfahren. Dieses ist im Vergleich zu dem Herstellungsverfahren über die "Sol-Gel-Route" relativ schnell und erlaubt eine kostengünstige Herstellung von Templaten für Kohlenstofferzeugnisse im industriellen Maßstab. Eine flüssige oder gasförmige siliziumhaltige Ausgangssubstanz wird einer chemischen Reaktion (Hydrolyse oder Pyrolyse) unterzogen und aus der Gasphase als Feststoffkomponente auf einer Ablagerungsfläche abgeschieden. Die Reaktionszone ist beispielsweise eine Brennerflamme oder ein Lichtbogen (Plasma). Mittels derartiger Plasma- oder CVD-Abscheideverfahren, die beispielsweise unter den Bezeichnungen OVD-, VAD-, MCVD-, PCVD- oder FCVD-Verfahren bekannt sind, werden im industriellen Maßstab neben synthetischem Kieselsäuresoot auch andere synthetische Werkstoffe wie Zinnoxid und Titannitrid hergestellt.

Synthetische poröse Kieselsäure (SiO₂) ist somit mittels derartiger Sootabscheideverfahren unter Einsatz preiswerter Ausgangssubstanzen im industriellen Maßstab relativ kostengünstig herstellbar. Die Sootvorform hält hohen Temperaturen beim Carbonisieren stand. Die Temperaturobergrenze wird durch das Einsetzen der Reaktion von SiO₂ mit Kohlenstoff zu SiC (bei etwa 1000 °C) vorgegeben.

Die mittlere relative Dichte der Sootvorform liegt typischerweise im Bereich von 10 % bis 30 %, vorzugsweise bei weniger als 20%, der theoretischen spezifischen Dichte von Quarzglas. Je geringer die Dichte ist, umso geringer sind Aufwand zum Entfernen des Templatmaterials und der damit einhergehende Materialverlust. Bei mittleren Dichten von weniger als 10 % ergibt sich jedoch eine geringe mechanische Stabilität, was die Handhabung der Sootvorfom erschwert.

Wichtig ist, dass beim Sootabscheideprozess SiO₂-Partikel agglomeriert oder aggregiert als Kieselsäuresoot abgeschieden werden, der eine anisotrope Masseverteilung mit hierarchischer Porenstruktur aufweist. Bei der Gasphasenabscheidung entstehen in der Reaktionszone Primärpartikel mit Partikelgrößen im Nanometerbereich, die sich auf ihrem Weg zur Ablagerungsfläche zusammenlagern und in Form mehr oder weniger sphärischer Agglomerate oder Aggregate auf der Ablagerungsfläche anfallen, die im Folgenden auch als "Sekundärteilchen" bezeichnet werden. Je nach ihrem Entstehungsort innerhalb der Reaktionszone und ihrem Weg zur Ablagerungsfläche bestehen die Sekundärteilchen aus einer unterschiedlichen Anzahl von Primärpartikeln und zeigen daher grundsätzlich eine breite Teilchengrößenverteilung. Innerhalb der Sekundärteilchen - zwischen den Primärpartikeln - liegen besonders kleine Hohlräume und Poren im Nanometerbereich vor, also so genannte Mesoporen, wohingegen sich zwischen den einzelnen Sekundärteilchen größerer Hohlräume oder Poren ausbilden.

Bei Einsatz eines derartigen porösen Templats werden die inneren Oberflächen der Poren und Hohlräume beim Infiltrieren mit der Vorstufe für den turbostratischen Kohlenstoff belegt, so dass die im Templat vorgegebene Porenstruktur mehr oder weniger exakt auf die Kohlenstoffstruktur überführt wird, die daher eine dem Templat entsprechende hierarchische Struktur mit oligomodaler Porengrößenverteilung aufweist.

Im einfachsten Fall umfasst der Sootabscheideprozess ein schichtweises Abscheiden von SiO₂-Partikeln auf einem relativ zur Reaktionszone bewegten Träger unter Bildung eines SiO₂-Sootkörpers. Alternativ dazu wird das beim Sootabscheideprozess anfallende Kieselsäurepulver anhand von Granulations-, Press-, Schlicker- oder Sinterverfahren zu Zwischenprodukten oder dem Templat weiterverarbeitet. Als Zwischenprodukte sind Granulate oder Schülpen zu nennen.

Der so erhaltene monolithische SiO₂-Sootkörper - oder Teile davon - ist unmittelbar als Sootvorform einsetzbar, wobei die monolithische Struktur das Infiltrieren gemäß Verfahrensschritt (a) (II) erleichtert. Die Schichtstruktur des Sootkörpers, findet sich im Kohlenstofferzeugnis wieder und zeigt sich in einer plättchenartigen oder flockenartigen Morphologie.

Dieses Kohlenstofferzeugnis ist beispielsweise als Ausgangsmaterial für die Herstellung der Elektrode einer Lithiumionen-Batterie geeignet, wobei es sich aufgrund seiner hierarchischen Porenstruktur durch eine hohe Schnellladefähigkeit auszeichnet.

Das Templat wird nach dem Carbonisieren gemäß Verfahrensschritt (a) (III) und vor dem Infiltrieren gemäß Verfahrensschritt (b) entfernt.

Das Entfernen erfolgt vorzugsweise durch chemische Auflösung, wobei im Fall einer Kieselsäurevorform als Lösungsmittel insbesondere Säuren (wie Flusssäure) oder Basen (wie Natriumhydroxyd) zu nennen sind. Das Templat dient lediglich als mechanisch und thermisch stabiles Gerüst zum Ablagern und Carbonisieren der Kohlenstoff-Vorstufe. Das resultierende Kohlenstofferzeugnis ist im Wesentlichen frei von Kieselsäuresoot, so dass auch der vorher von Kieselsäuresoot belegte Oberflächenbereich frei zugänglich ist.

Es hat sich als günstig erwiesen, wenn als Kohlenstoff-Vorläufersubstanz gemäß Verfahrensschritt (b) mesophasiges Pech eingesetzt wird.

Mesophasiges Pech - auch als "Mesophasenpech" bezeichnet, ist ein kohlenstoffhaltiges Material, das eine geordnete flüssigkristalline Struktur besitzt. Es ist in organischen Lösungsmitteln, wie THF, löslich. Die in die Poren der Kohlenstoffstruktur infiltrierte Lösung des mesophasigen Pechs führt nach dem Carbonisieren zu einer graphitähnlichen Ablagerung von Kohlenstoff, welche die Hülle des Kern-Hülle-Verbundwerkstoffs bildet und dabei die Mikroporen der Kohlenstoffstruktur verschließt, ohne die Hohlräume zwischen den Schichtstapeln zu verstopfen.

Vorzugsweise wird das Kohlenstofferzeugnis zu feinteiligem Kohlenstoff aus porösen Partikeln zerteilt.

Das Kohlenstofferzeugnis fällt beim erfindungsgemäßen Verfahren in der Regel als Monolith oder mit plättchen- oder flockenartiger Morphologie an und kann leicht zu kleineren Partikeln zerteilt werden. Die nach dem Zerteilen erhaltenen Partikel zeigen vorzugsweise eine hierarchische Porenstruktur und werden beispielsweise mittels üblicher Pasten- oder Schlickerverfahren zu Formkörpern oder Schichten weiterverarbeitet.

Die Weiterverarbeitung des nach Verfahrensschritt (c) erhaltenen Kohlenstofferzeugnisses zu einer Elektrode für eine Lithium-Batterie erfolgt anhand der aus dem Stand der Technik bekannten Methoden.

Bei dem anhand des Verfahrens erhaltenen porösen Kohlenstofferzeugnis besteht die erste Kohlenstoffvarietät aus turbostratischem Kohlenstoff mit einer ersten Mikroporosität, und die zweite Kohlenstoffvarietät aus graphitähnlichem Kohlenstoff mit einer zweiten Mikroporosität, die geringer ist als die erste Mikroporosität.

Das poröse Kohlenstofferzeugnis weist eine Kern-Hülle-Struktur (core-shell structure) auf, in welcher turbostratischer Kohlenstoff den Kern bildet, und graphitähnlicher Kohlenstoff die Hülle.

Turbostratischer Kohlenstoff weist ein Schichtgefüge aus Graphenschichten auf. Im Gegensatz zu Graphit mit kristallographischer Fernordnung der Graphenschichten ist das Schichtgefüge in turbostratischem Kohlenstoff infolge von Translation oder Rotation einzelner Schichtstapel jedoch mehr oder weniger fehlgeordnet. Fast alle synthetisch hergestellten Kohlenstofferzeugnisse und so genannter amorpher Kohlenstoff (Glaskohlenstoff) fallen mit turbostratischem Schichtgefüge an. Kohlenstoff mit turbostratischem Schichtgefüge ist durch Erhitzen auf hohe Temperatur nicht graphitisierbar. Trotz Vorhandensein von Kohlenstoff-Schichtstapeln ist turbostratischer beziehungsweise nicht graphitisierbarer Kohlenstoff für die Anwendung als Elektrodenmaterial wiederaufladbarer Lithium-Batterien in der Regel nicht geeignet, da er typischerweise eine hohe Mikroporosität und damit einhergehend eine hohe spezifische Oberfläche hat, die zu irreversiblen Kapazitätsverlusten beim ersten Aufladen der Batterie führt.

Andererseits ist turbostratischer beziehungsweise nicht graphitisierbarer Kohlenstoff vergleichsweise kostengünstig herstellbar. Fast alle synthetisch hergestellten Kohlenstofferzeugnisse und so genannter amorpher Kohlenstoff (Glaskohlenstoff) fallen mit turbostratischem Schichtgefüge an. Von daher wäre sein Einsatz als Elektrodenmaterial wünschenswert.

Um dies zu ermöglichen wird der turbostratische Kohlenstoff mit einer Hülle aus graphitisierbarem Kohlenstoff umgeben, der nach dem Carbonisieren als "graphitähnlicher Kohlenstoff" vorliegt. Dieser zeigt ein graphitisches oder graphitähnliches Schichtgefüge, das turbostratische Anteile enthalten kann, und das insbesondere eine geringe spezifische Oberfläche und eine geringe Mikroporosität aufweist. Der graphitähnliche Kohlenstoff vermindert die Mikroporosität und die spezifische Oberfläche des Verbundmaterials ohne die Zugänglichkeit zu den Kohlenstoff-Schichtstapeln des turbostratischen Kohlenstoffs nennenswert zu beeinträchtigen.

Die ungünstige Mikroporosität des turbostratischen Kohlenstoffs wird durch den graphitähnlichen Kohlenstoff drastisch reduziert und im Idealfall vollkommen beseitigt und es wird ein kostengünstiges Kohlenstofferzeugnis erhalten, dessen Eigenschaften in Bezug auf Morphologie und Oberfläche denjenigen eines teuren Kohlenstofferzeugnisses aus rein graphitischem Ausgangsmaterial entsprechen, und das insbesondere für einen Einsatz als Elektrodenmaterial für eine Lithium-Batterie geeignet ist.

Das poröse Kohlenstofferzeugnis fällt üblicherweise in Form poröser Kohlenstoffflocken an. Derartige Kohlenstoffflocken oder -plättchen an. Diese haben eine schichtförmige Morphologie und umfassen eine Kohlenstofflage, in der Regel jedoch eine Vielzahl einzelner Kohlenstofflagen. Jede Kohlenstofflage besteht aus einem porösen Kohlenstoffgerüst. Innerhalb der Elektrode liegen KohlenstoffFlocken vor, die sich nicht aus diskreten, verschiebbaren Einzelteilchen zusammensetzen, sondern die von einem Kohlenstoffgerüst oder von mehreren zusammenhängenden Kohlenstoffgerüsten gebildet werden. Dies vermindert die Gefahr von Alterungserscheinungen, wie etwa einer Erhöhung von Übergangswiderständen.

Besonders bevorzugt ist ein poröses Kohlenstofferzeugnis mit hierarchischer Porenstruktur.

Diese stellt sich infolge der oben anhand des erfindungsgemäßen Verfahrens bereits näher erläuterten Herstellung eines Kieselsäuresoot-Templats durch Gasphasenabscheidung ein, und eignet sich besonders gut für die Herstellung der Elektroden aufladbarer Lithiumionen-Batterien mit hoher Schnellladefähigkeit.

Vorzugsweise liegt das Kohlenstofferzeugnis in Form poröser Kohlenstoffflocken aus Kohlenstoffschichten mit einer mittleren Schichtdicke im Bereich von 10 µm bis 200 µm, vorzugsweise im Bereich von 30 µm bis 100 µm, vor.

Die Schichtstruktur der Kohlenstoffflocken spiegelt eine schichtförmige, anisotrope Masseverteilung der Kieselsäure-Vorform wider. Schichtdicken von weniger als 10 µm können zu einer geringen mechanischen Stabilität der Kohlenstoffflocken führen. Kohlenstoffflocken mit einer Dicke von mehr als 200 µm sind über ihre Dicke zunehmend inhomogener.

Beim Einsatz der Kohlenstoffflocken zur Herstellung einer Elektrodenschicht eines Lithiumionen-Akkumulators ist die Schichtdicke der Kohlenstoffflocken im Idealfall in der Größenordnung der Dicke der Elektrodenschicht. Dadurch werden Übergangswiderstände zwischen kleineren, diskreten Kohlenstoffpartikeln vermieden oder vermindert.

Zur Herstellung einer derartigen Elektrodenschicht werden die Kohlenstoffflocken in einer Flüssigkeit dispergiert und mittels der bekannten Methoden zu der porösen Kohlenstoff-Schicht weiterverarbeitet.

### Ausführungsbeispiel

Nachfolgend wird die Erfindung anhand eines Ausführungsbeispiels und einer Zeichnung näher erläutert. Im Einzelnen zeigt
- **Figur 1**: eine Vorrichtung zur Herstellung eines SiO₂-Sootkörpers in schematischer Darstellung,
- **Figur 2**: eine computertomographische Aufnahme eines Sootkörpers in einer Ansicht in Richtung der Sootkörper-Längsachse,
- **Figur 3**: eine REM-Aufnahme einer Kieselsäurevorform mit hierarchischer Porenstruktur,
- **Figur 4**: ein Diagramm zur Infiltrationszunahme pro Infiltrationsschritt bei Verwendung von mesophasigem Pech für jeweils zwei Proben,
- **Figur 5**: ein Diagramm zur Infiltrationszunahme pro Infiltrationsschritt bei Verwendung von Zuckerlösung für jeweils zwei Proben,
- **Figur 6**: ein Diagramm zur Porengrößenverteilung bei einem Vorprodukt aus turbostratischem Kohlenstoff, ermittelt durch Quecksilber-Porosimetrie,
- **Figur 7**: ein Diagramm zur Porengrößenverteilung nach dem Imprägnieren des Vorprodukts von Fig. 6 mit graphitisierbarem Kohlenstoff und anschließendem Carbonisieren, ermittelt durch Quecksilber-Porosimetrie,
- **Figur 8**: ein Diagramm zur thermogravimetrischen Analyse beim Erhitzen eines Vorprodukts mit nicht graphitisierbarem Kohlenstoff unter sauerstoffhaltiger Atmosphäre, und
- **Figuren 9a bis 9d**: Herstellungsstufen des Kohlenstofferzeugnisses in schematischer Darstellung

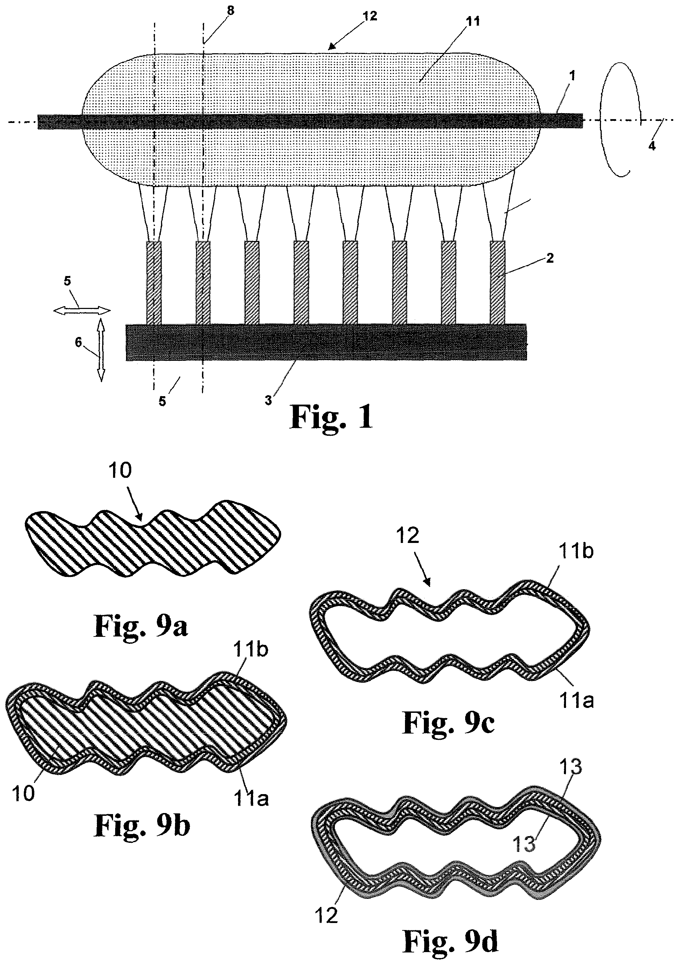

Die in **Figur 1** dargestellte Vorrichtung dient zur Herstellung eines SiO₂-Sootkörpers. Entlang eines Trägerrohres 1 aus Aluminiumoxid ist eine Vielzahl in einer Reihe angeordneter Flammhydrolysebrenner 2 angeordnet. Die Flammhydrolysebrenner 2 sind auf einem gemeinsamen Brennerblock 3 montiert, der parallel zur Längsachse 4 des Trägerrohrs 1 zwischen zwei, in Bezug auf die Längsachse 4 ortsfesten Wendepunkten hin- und herbewegt wird und der senkrecht dazu verschiebbar ist, wie dies die Richtungspfeile 5 und 6 andeuten. Die Brenner 2 bestehen aus Quarzglas; ihr Abstand zueinander beträgt 15 cm.

Den Flammhydrolysebrennern 2 ist jeweils eine Brennerflamme 7 zugeordnet, deren Hauptausbreitungsrichtung senkrecht zur Längsachse 4 des Trägerrohrs 1 verläuft. Mittels der Flammhydrolysebrenner 2 werden auf der Zylindermantelfläche des um seine Längsachse 4 rotierenden Trägerrohrs 1 SiO₂-Partikel abgeschieden, so dass schichtweise der poröse SiO₂-Rohlin 8 mit einem Außendurchmesser von 400 mm aufgebaut wird. Die einzelnen SiO₂-Sootlagen haben im Mittel eine Dicke um 50 µm.

Den Flammhydrolysebrennern 2 werden jeweils als Brennergase Sauerstoff und Wasserstoff zugeführt sowie SiCl₄ als Einsatzmaterial für die Bildung der SiO₂-Partikel. Der Brennerblock 3 wird dabei mit einer Amplitude von zwei Brennerabständen (als 30 cm) hin- und herbewegt. Während des Abscheideprozesses stellt sich auf der Rohlingoberfläche 9 eine mittlere Temperatur von etwa 1200 °C ein.

Nach Abschluss des Abscheideprozesses wird ein Rohr aus porösem SiO₂-Soot (Sootrohr) mit einer Länge von 3 m, einem Außendurchmesser von 400 mm und einem Innendurchmesser von 50 mm erhalten. Das Temperatur beim Aufbau des Sootkörpers wird vergleichsweise niedrig gehalten, so dass das SiO₂-Sootmaterial eine geringe mittlere relative Dichte von 22 % (bezogen auf die Dichte von Quarzglas 2,21 g/cm³) hat.

Das Sootrohr wird einer computertomographischen Untersuchung (CT-Untersuchung) unterzogen. Dabei wird das Sootrohr über seine Länge mit Röntgenstrahlen durchstrahlt. Die so gewonnenen Aufnahmen lassen quantitative und qualitative Aussagen über die SiO₂-Masseverteilung und über Intensität und die Homogenität der axialen und radialen Schichtstruktur des Sootrohres zu.

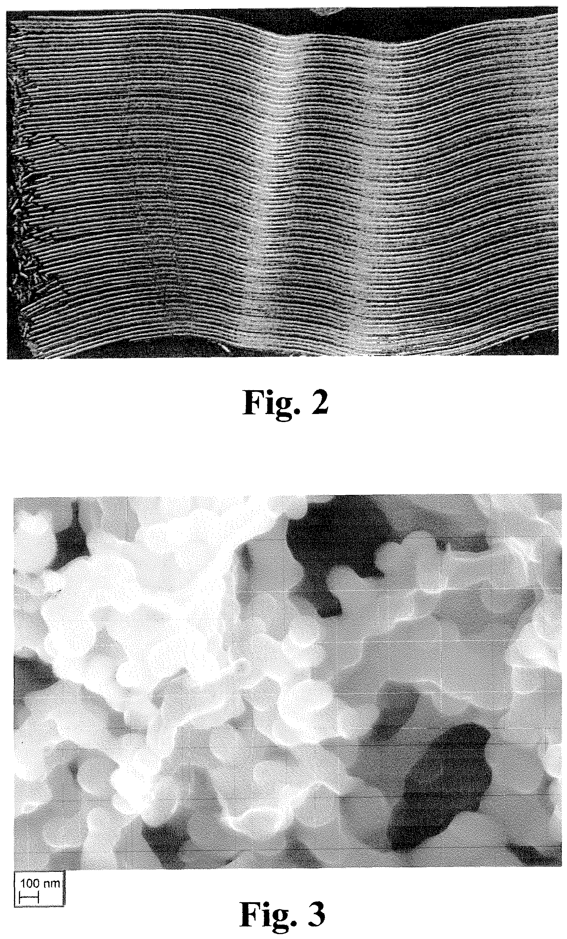

**Figur 2** zeigt die entsprechende CT-Aufnahme. Bei dieser Aufnahmetechnik erscheinen Bereiche mit relativ hoher Dichte als helle Flächenbereiche. Anhand der deutlichen Helligkeitsunterschiede sind parallel zueinander verlaufende Sichten mit einer Schichtdicke um 50 µm deutlich erkennbar.

Die REM-Aufnahme des Sootkörpers gemäß **Figur 3** zeigt eine Gerüststruktur mit einer Vielzahl zusammenhängender Poren und Hohlräume unterschiedlicher Größe. Die Gerüststruktur setzt sich aus einzelnen sphärischen und miteinander verwachsenen SiO₂-Sekundärteilchen zusammen, die eine feingliedrig zerklüftete Oberfläche, die von größeren Hohlräumen kanalartig durchzogen ist. Eine Messung der spezifischen inneren Oberfläche nach der BET-Methode ergibt Messwerte um 20 m²/g.

Teile des Sootkörpers werden als Templat für die Herstellung von porösem Kohlenstoff eingesetzt, wie dies in **Figuren 9a bis 9d** schematisch dargestellt ist und anhand dieser Figuren im Folgenden näher erläutert wird.

In einem ersten Versuch werden Proben des SiO₂-Sootkörpers in ein Tauchbad einer Lösung von mesophasigem Pech in THF eingebracht. Die imprägnierte Probe wird anschließend getrocknet. Diese Imprägnierungs- und Trocknungsschritte werden wiederholt, bis kein nennenswertes freies Porenvolumen mehr übrig bleibt.

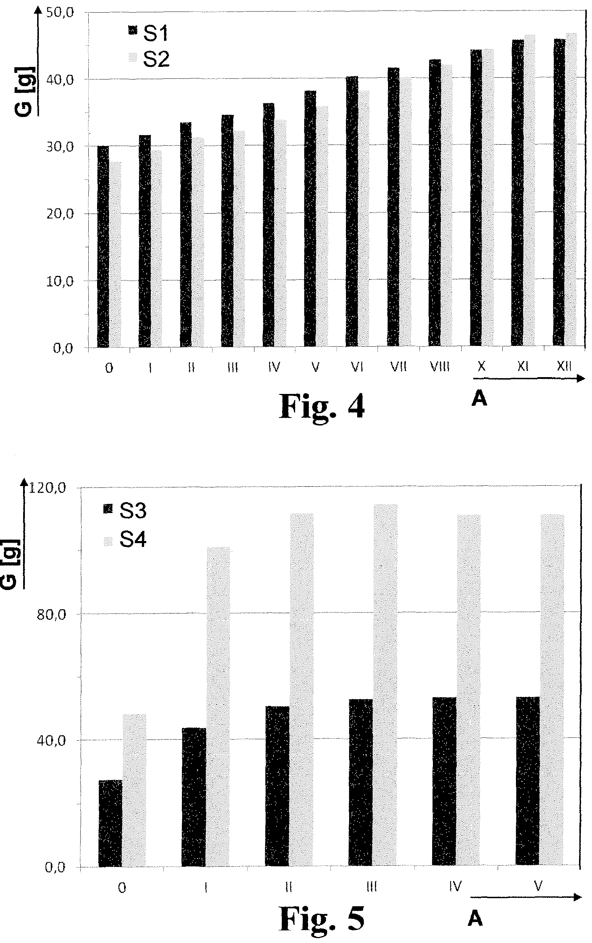

Das Diagramm von **Figur 4** zeigt die entsprechende Gewichtszunahme "G" (in g) mit der Anzahl "A" der Infiltrationsschritte für zwei Proben S1 und S2 aus unterschiedlichen Bereichen des Sootkörpers. Demnach ist jeweils nach erst 10 bis 11 Infiltrationsschritten eine Sättigung erreicht.

In einem zweiten Versuch werden Proben des Sootkörpers in ein Tauchbad einer wässrigen, gesättigten Lösung aus Rohrzucker eingebracht. Das imprägnierte Material wird anschließend getrocknet. Diese Imprägnierungs- und Trocknungsschritte werden wiederholt, bis kein nennenswertes freies Porenvolumen mehr übrig bleibt.

Das Diagramm von **Figur 5** zeigt die entsprechende Gewichtszunahme "G" (in g) mit der Anzahl "A" der Infiltrationsschritte für jeweils zwei Proben S3 und S4 aus unterschiedlichen Bereichen des Sootkörpers. Demnach ist jeweils nach bereits zwei Infiltrationsschritten die Sättigung erreicht. Die erforderliche Anzahl an Infiltrationsschritten ist somit um den Faktor 5 geringer als beim Einsatz von mesophasigem Pech zum Infiltrieren.

Die anhand des zweiten Versuchs erhaltene Probe aus SiO₂-Sootkörper und getrockneten Rohrzuckerlagen wird durch Erhitzen in Stickstoff bei 700 °C carbonisiert. Es bildet sich eine poröse Kompositstruktur aus sphärischen SiO₂-Sekundärpartikeln 10 als Kern und einer zweilagigen Umhüllung 11 a, 11 b aus turbostratischem, nicht graphitisierbarem Kohlenstoff. Die Kompositstruktur hat eine spezifische Oberfläche (nach BET) von etwa 600 m²/g, wobei die deutliche Erhöhung der spezifischen Oberfläche gegenüber dem SiO₂-Sootbereich im Wesentlichen auf eine hohe Mikroporosität der Lagen 11 a, 11 b aus turbostratischem Kohlenstoff zurückzuführen ist.

Wie in **Figur 9c** dargestellt, werden die sphärischen SiO₂-Sekundärpartikel 10 (das heißt, das Hart-Templat aus SiO₂-Sootmaterial) anschließend entfernt. Dies geschieht durch Einbringen der imprägnierten Sootkörper-Probe in ein Flusssäurebad. Nach dem Wegätzen der sphärischen SiO₂-Sekundärpartikel 10 wird ein Vorprodukt 12 aus porösem, turbostatischem Kohlenstoff erhalten, dessen Porenstruktur sich aus der ursprünglichen sphärischen SiO₂-Sekundärpartikeln 10 ableitet, und das der Porenstruktur des Templats ähnelt. Insbesondere zeichnet sie sich durch eine hierarchische Porenstruktur aus, mit einer Vielzahl relativ großer Porenkanäle (Makroporen), welche eine ansonsten feingliedrig zerklüftete Oberflächenstruktur durchziehen. Das Vorprodukt 12 wird gespült und getrocknet.

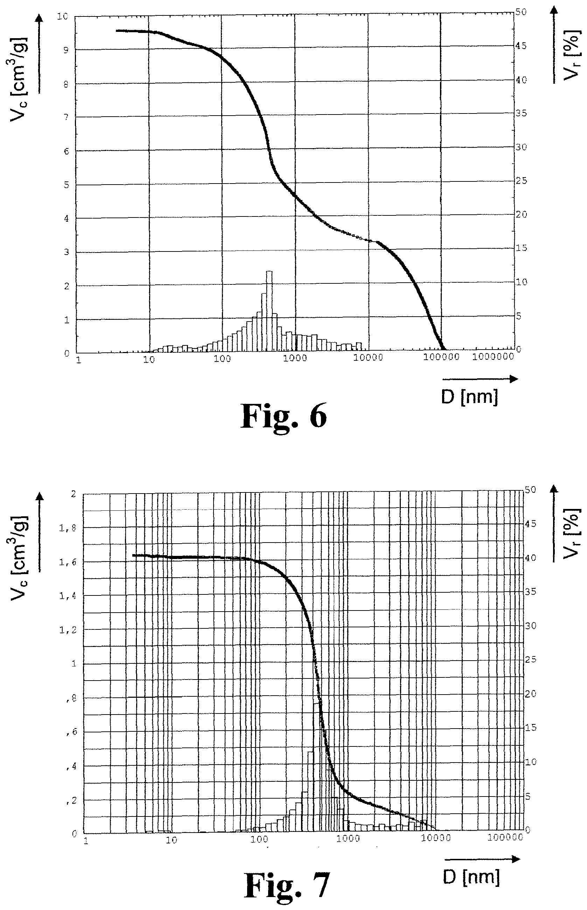

Das Diagramm von **Figur 6** zeigt die Porengrößenverteilung des so erhaltenen porösen Kohlenstoff-Vorprodukts. Auf der linken Ordinate ist das kumulative Porenvolumen V_{c} in [cm³/g] und auf der rechten Ordinate das relative Porenvolumen Vᵣ in [%] gegen den Porendurchmesser D in [nm] aufgetragen (in logarithmischer Auftragung). Dabei ist zu beachten, dass die gezeigten Messergebnisse mittels einer Quecksilber-Porosimetermessung erhalten wurden. Die Technik beruht auf der Intrusion der nicht benetzenden Flüssigkeit Quecksilber in ein poröses System unter Druck. Diese Methode liefert zuverlässige Informationen über die Porengrößenverteilung, das Porenvolumen, die Scheinbare und Wahre Dichte im Bereich von Makroporen bis zu großen Mesoporen, jedoch nicht für Poren im Nanometerbereich, so dass sich für die spezifische Oberfläche eine Diskrepanz zu dem nach der BET-Methode ermittelten Wert von 600 m²/g ergibt. Diese ist dadurch zu erklären, dass die Poren im Nanometerbereich, die den größten Anteil zur gesamten inneren Oberfläche ausmachen, von der Quecksilber-Porosimetermessung nicht erfasst werden können.

Es ist erkennbar, dass sich der poröse turbostatische Kohlenstoff durch eine breite Porengrößenverteilung auszeichnet, die von etwa 5 nm bis 100.000 nm reicht und die ein Maximum bei einer Porengröße um 500 nm zeigt.

Zwecks Aktivierung und Beseitigung aktiver Kohlenstoffzentren innerhalb des porösen Kohlenstoff-Vorprodukts wird dieses an Luft kurzzeitig auf eine Temperatur von 400 °C erhitzt.

Die weitere Vorbereitung zur Graphitisierung erfolgt in üblicher Weise durch Imprägnieren mit mesophasigem Pech, das in THF gelöst ist. Hierbei genügt ein einziger Imprägnierungsschritt, um die Mikroporosität des turbostatischen Kohlenstoffs nahezu vollständig zu beseitigen.

Nach anschließender Carbonisierung bei einer Temperatur von 700 °C wird ein Kohlenstofferzeugnis 14 mit schichtförmiger Ausbildung und mit graphitähnlicher Oberfläche erhalten. Wie in **Figur 9d** dargestellt, liegt das Kohlenstofferzeugnis 14 als Kern-Hülle-Struktur mit einem zweilagigen Kern in Form des Kohlenstoffstruktur 12 aus turbostatischem Kohlenstoff vor, dessen mikroporöse Strukturen durch eine Hülle 13 aus graphitähnlichem Kohlenstoff abgedeckt sind.

Morphologisch betrachtet setzt sich das so erhaltene Kohlenstofferzeugnis 14 aus einer Vielzahl von Lagen plättchenförmiger oder flockenartiger Gebilde zusammen, die gebogen sind und leicht zerdrückt werden können. Die einzelnen papierähnlichen Lagen, die eine mittlere Dicke von etwa 50 µm haben, sind auf die ursprüngliche Schichtstruktur des SiO₂-Sootkörpers zurückzuführen.

Das Diagramm von **Figur 7** zeigt die Porengrößenverteilung des so erhaltenen porösen Kohlenstofferzeugnisses, ermittelt durch Quecksilber-Porosimetermessung. Auf der linken Ordinate ist das kumulative Porenvolumen V_{c} in [cm³/g] und auf der rechten Ordinate das relative Porenvolumen Vᵣ in [%] gegen den logarithmisch aufgetragenen Porendurchmesser D in [nm].

Es ist erkennbar, dass das poröse Kohlenstofferzeugnis eine vergleichsweise enge Porengrößenverteilung aufweist, die von etwa 10 nm bis 10.000 nm reicht und die ein Maximum weiterhin bei einer Porengröße um 500 nm zeigt. Die spezifische Oberfläche beträgt allerdings nur noch etwa 30 m²/g.

Dieses Kohlenstofferzeugnis wird als Ausgangsmaterial für die Herstellung der Elektrode einer aufladbaren Lithiumionen-Batterie eingesetzt. Hierzu wird es zerkleinert und in einer Dispersion aufgenommen und anhand der üblichen Methoden zu der Elektrode verarbeitet. Die plättchen- oder flockenartige Morphologie der Teilchen und deren breite Porengrößenverteilung sowie die hierarchische Porenstruktur bleiben dabei erhalten. Dies ist Voraussetzung für eine hohe Schnellladefähigkeit der Lithiumionen-Batterie.

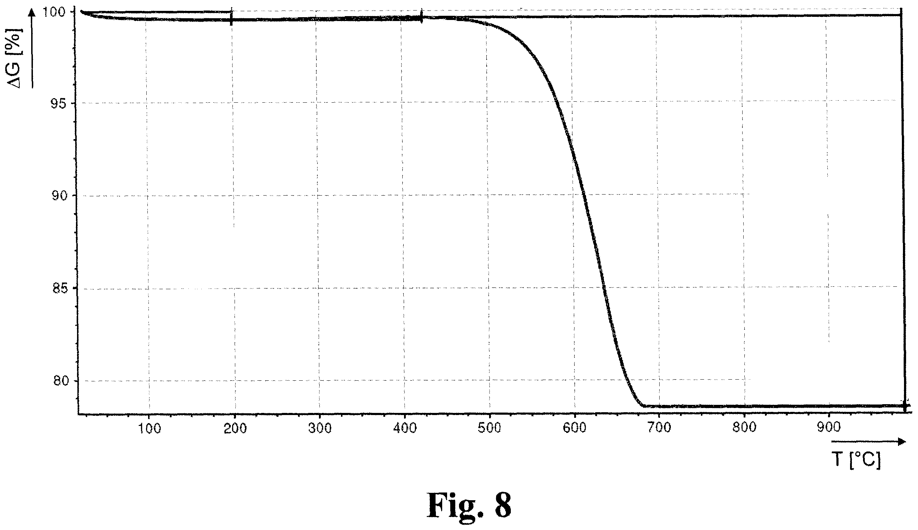

**Figur 8** zeigt das Ergebnis einer thermogravimetrischen Analyse (nach DIN 51005 und DIN 51006) beim Behandeln einer Probe des porösen Kieselsäure-Templats, unter reinem Sauerstoff, das mit einer zweilagigen Rorzuckerablagerung bis zur Sättigung imprägniert worden ist, wie oben beschrieben. Auf der y-Achse ist der Gewichtsverlust ΔG in %, bezogen auf das Anfangsgewicht, und auf x-Achse ist die Carbonisierungstemperatur T in °C aufgetragen.

Demnach zeigt sich ab einer Temperatur von etwa 420 °C eine erste, geringfügige Gewichtsabnahme, die auf das Abbrennen aktiver Kohlenstoffzentren zurückgeführt werden kann. Bei einer Temperatur von etwa 500 °C stellt eine deutliche Gewichtsabnahme ein, die auf die Oxidation der Rorzuckerablagerung auf den Oberflächen des SiO₂-Templats zurückzuführen ist, bevor die Gewichtsänderung bei etwa 680 °C bei einem Restgewicht von etwa 78,5 % des anfänglichen Gewichts in eine Sättigung mündet, der dem Gewicht des SiO₂-Templats entspricht.

## Patentansprüche

1. Verfahren zur Herstellung eines porösen Kohlenstofferzeugnisses, umfassend folgende Verfahrensschritte:
(a) Bereitstellen einer porösen Kohlenstoffstruktur (12) mit einer ersten spezifischen Oberfläche,
(b) Infiltrieren der Kohlenstoffstruktur (12) mit einer Vorläufersubstanz für graphitisierbaren Kohlenstoff,
(c) Carbonisieren der Vorläufersubstanz unter Bildung des Kohlenstofferzeugnisses (14) mit einer zweiten spezifischen Oberfläche, die geringer ist als die erste spezifische Oberfläche,
wobei das Bereitstellen der Kohlenstoffstruktur (12) gemäß Verfahrensschritt (a) umfasst:
(I) Bereitstellen eines Poren aufweisenden Templats (10),
(II) Infiltrieren der Poren des Templats (10) mit einer Lösung, die eine Vorstufe für nicht graphitisierbaren Kohlenstoff enthält,
(III) Carbonisieren der Vorstufe unter Bildung der Kohlenstoffstruktur (12) mit der ersten spezifischen Oberfläche, und
(IV) Entfernen des Templats (10).

2. Verfahren nach Anspruch 1, **dadurch gekennzeichnet, dass** als Vorstufe für den nicht graphitisierbaren Kohlenstoff gemäß Verfahrensschritt (a) (II) wasserlösliches Kohlenhydrat, vorzugsweise Saccharose, eingesetzt wird.

3. Verfahren nach Anspruch 1 oder 2, **dadurch gekennzeichnet, dass** beim Carbonisieren der Vorstufe gemäß Verfahrensschritt (a) (III) eine Kohlenstoffstruktur (12) mit einer spezifischen Oberfläche nach BET im Bereich von 400 bis 600 m²/g erzeugt wird.

4. Verfahren nach Anspruch 3, **dadurch gekennzeichnet, dass** das Carbonisieren gemäß Verfahrensschritt (c) unter einer Inertgas-Atmosphäre bei einer Temperatur von mindestens 500 °C erfolgt.

5. Verfahren nach Anspruch 4, **dadurch gekennzeichnet, dass** sich dem Carbonisieren eine Aktivierungsbehandlung unter oxidierender Atmosphäre bei einer Temperatur im Bereich von 200 °C bis 450 °C, vorzugsweise bei einer Temperatur im Bereich von 350 °C bis 425 °C, anschließt.

6. Verfahren nach einem der vorhergehenden Ansprüche, **dadurch gekennzeichnet, dass** beim Carbonisieren der Kohlenstoff-Vorläufersubstanz gemäß Verfahrensschritt (c) ein Kohlenstofferzeugnis (14) mit einer spezifische Oberfläche nach BET im Bereich von weniger als 50 m²/g erzeugt wird.

7. Verfahren nach einem der vorhergehenden Ansprüche, **dadurch gekennzeichnet, dass** das Bereitstellen des Templats (10) gemäß Verfahrensschritt (a) (I) das Herstellen von synthetischem Kieselsäuresoot mit hierarchischer Porenstruktur umfasst.

8. Verfahren nach Anspruch 7, **dadurch gekennzeichnet, dass** Herstellen des Kieselsäuresoots einen Sootabscheideprozess umfasst, bei dem eine SiO₂-Ausgangsverbindung durch Hydrolyse oder Pyrolyse zu SiO₂-Partikeln umgesetzt, die SiO₂-Partikel agglomeriert oder aggregiert und unter Bildung des Templats (10) aus Kieselsäuresoot abgeschieden werden, das eine anisotrope Masseverteilung mit hierarchischer Porenstruktur aufweist.

9. Verfahren nach einem der vorhergehenden Ansprüche, **dadurch gekennzeichnet, dass** als Kohlenstoff-Vorläufersubstanz gemäß Verfahrensschritt (b) mesophasiges Pech eingesetzt wird.

10. Verfahren nach einem der vorhergehenden Ansprüche, **dadurch gekennzeichnet, dass** das Kohlenstofferzeugnis (14) in Form feinteiliger, poröser Kohlenstoff-Flocken erzeugt wird.

## Claims

1. A method for producing a porous carbon product, comprising the following method steps:
(a) providing a porous carbon structure (12) with a first specific surface area,
(b) infiltrating the carbon structure (12) with a precursor substance for graphitizable carbon,
(c) carbonizing the precursor substance so as to form the carbon product (14) with a second specific surface area smaller than the first specific surface area,
wherein providing the carbon structure (12) according to method step (a) comprises:
(I) providing a template (10) containing pores,
(II) infiltrating the pores of the template (10) with a solution containing a precursor for non-graphitizable carbon,
(III) carbonizing the precursor with formation of the carbon structure (12) having the first specific surface area, and
(IV) removing the template (10).

2. The method according to claim 1, **characterized in that** water-soluble carbohydrate, preferably saccharose, is used as the precursor for the non-graphitizable carbon according to method step (a) (II).

3. The method according to claim 1 or 2, **characterized in that** during carbonization of the precursor according to method step (a) (III) a carbon structure (12) is produced with a specific BET surface area in the range of 400-600 m²/g.

4. The method according to claim 3, **characterized in that** carbonizing according to method step (c) takes place in an inert gas atmosphere at a temperature of at least 500 °C.

5. The method according to claim 4, **characterized in that** carbonizing is followed by an activation treatment in an oxidizing atmosphere at a temperature ranging from 200 °C to 450 °C, preferably at a temperature in the range of 350 °C to 425 °C.

6. The method according to any one of the preceding claims, **characterized in that** while the carbon precursor substance is carbonized according to method step (c), a carbon product (14) is produced with a specific BET surface area in the range of less than 50 m²/g.

7. The method according to any one of the preceding claims, **characterized in that** providing the template (10) according to method step (a) (I) comprises producing synthetic silica soot with a hierarchical pore structure.

8. The method according to claim 7, **characterized in that** producing the silica soot comprises a soot deposition process in which a SiO₂ start compound is converted by hydrolysis or pyrolysis into SiO₂ particles, the SiO₂ particles are agglomerated or aggregated and deposited with formation of the template (10) from silica soot having an anisotropic mass distribution with hierarchical pore structure.

9. The method according to any one of the preceding claims, **characterized in that** mesophase pitch is used as the carbon precursor substance according to method step (b).

10. The method according to any one of the preceding claims, **characterized in that** the carbon product (14) is produced in the form of finely divided porous carbon flakes.

## Revendications

1. Procédé pour la fabrication d'un produit de carbone poreux comprenant les étapes suivantes de procédé :
(a) préparation d'une structure poreuse de carbone (12) avec une première surface spécifique,
(b) infiltration de la structure de carbone (12) avec une substance précurseur pour le carbone grafitisable,
(c) carbonisation de la substance précurseur pour former le produit de carbone (14) avec une seconde surface spécifique, qui est inférieure à la première surface spécifique,
la préparation de la structure de carbone (12) selon l'étape de de procédé (a) comprenant :
(I) préparation d'un modèle (10) présentant des pores,
(II) infiltration des pores du modèle (10) avec une solution contenant un précurseur pour le carbone non grafitisable,
(III) carbonisation d'un précurseur en formant la structure de carbone (12) avec la première surface spécifique, et
(IV) retrait du modèle (10).

2. Procédé selon la revendication 1, **caractérisé en ce qu'**il est utilisé un hydrate de carbone soluble dans l'eau selon l'étape de procédé (a) (II) en tant que précurseur pour le carbone non grafitisable.

3. Procédé selon la revendication 1 ou 2, **caractérisé en ce qu'**une structure de carbone (12) avec une surface spécifique selon la mesure BET comprise entre 400 et 600 m²/g est produite pendant la carbonisation du précurseur selon l'étape de procédé (a) (III).

4. Procédé selon la revendication 3, **caractérisé en ce que** la carbonisation selon l'étape de procédé (c) est effectuée dans une atmosphère de gaz inerte à une température d'au moins 500 °C.

5. Procédé selon la revendication 4, **caractérisé en ce que** la carbonisation est suivie par un traitement d'activation dans une atmosphère oxydante à une température comprise entre 200 °C et 450 °C, de préférence entre 350 °C et 425 °C.

6. Procédé selon l'une des revendications précédentes, **caractérisé en ce qu'**un produit de carbone (14) avec une surface spécifique selon la mesure BET inférieure à 50 m²/g est produit pendant la carbonisation de la substance précurseur de carbone selon l'étape de procédé (c).

7. Procédé selon l'une des revendications précédentes, **caractérisé en ce que** la préparation du modèle (10) selon l'étape de procédé (a) (I) comprend la fabrication de suie de silice synthétique avec une structure de pores hiérarchique.

8. Procédé selon la revendication 7, **caractérisé en ce que** la fabrication de la suie de silice comporte un processus de déposition de suie, une liaison de sortie étant transformée par hydrolyse ou pyrolyse en particules de SiO₂, les particules de SiO₂ étant agglomérées ou agrégées et déposées en formant le modèle (10) qui présente une répartition massique anisotrope avec une structure de pores hiérarchique.

9. Procédé selon l'une des revendications précédentes, **caractérisé en ce que** le brai mésophase est utilisé comme substance précurseur de carbone selon l'étape de procédé (b).

10. Procédé selon l'une des revendications précédentes, **caractérisé en ce que** le produit de carbone (14) est produit sous forme de flocons de carbone poreux en fines particules.
